# FASCICULE DE BREVET EUROPEEN

(11) **EP 1 331 091 B1**
(45) Date de publication et mention de la délivrance du brevet: **20.07.2011**
(21) Numéro de dépôt: 03290104.3
(22) Date de dépôt: 15.01.2003
(51) Int. Cl.: B32B 27/34, C08L 77/00, F16L 11/12

(54) **Structure multicouche à base de polyamides et d'un liant en mélange de copolyamides**
Mehrschichtige Struktur auf Basis von Polyamiden und eines Bindemittels aus Kopolyamidmischung
Multilayer structure based on polyamides and on a binder made of copolyamides blend

(30) Priorité: 29.01.2002 FR 0201039
(43) Date de publication de la demande: 30.07.2003
(73) Titulaire: ARKEMA FRANCE, 92700 Colombes (FR)
(72) Inventeur: Lacroix, Christophe, 27700 Harquency (FR)
(74) Mandataire: Delprat, Corinne

(56) Documents cités:
- EP-A- 1 036 968
- EP-A- 1 162 061
- US-A- 4 487 895
- US-A- 4 661 585
- US-A- 5 053 259
- IGOR NOVÁK ET AL: "Surface Energy and Adhesive Properties of Polyamide 12 Modified by Barrier and Radio-Frequency Discharge Plasma", MONATSHEFTE FÜR CHEMIE - CHEMICAL MONTHLY ; AN INTERNATIONAL JOURNAL OF CHEMISTRY, SPRINGER-VERLAG, AU LNKD- DOI:10.1007/S00706-006-0492-2, vol. 137, no. 7, 26 June 2006 (2006-06-26) , pages 943-952, XP019430628, ISSN: 1434-4475

## Description

La présente invention concerne des structures à base de polyamides et d'un liant en mélange de copolyamides. Elles comprennent une couche de polyamide, une couche en mélange de copolyamides et une autre couche de polyamide. Elle est particulièrement utile quand l'une des couches de polyamide est en PA 12, l'autre couche de polyamide étant en PA 6 ou à base de PA 6. Ces structures peuvent comprendre d'autres couches. Ces structures sont utiles pour faire des réservoirs, des conteneurs, des bouteilles, des films multicouches et des tubes. Elles peuvent être fabriquées par coextrusion soufflage. L'intérêt de ces structures est qu'elles sont barrière à de nombreux produits. Une utilisation particulièrement utile concerne des tubes pour le transport d'essence et en particulier pour amener l'essence du réservoir d'une automobile jusqu'au moteur.

Pour des raisons de sécurité et de préservation de l'environnement les constructeurs d'automobiles imposent à ces tubes à la fois des caractéristiques mécaniques comme la résistance à l'éclatement et la flexibilité avec une bonne tenue aux chocs à froid (-40°C) ainsi qu'à température élevée (125°C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur. Ces tubes sont fabriqués par coextrusion des différentes couches selon les techniques habituelles des thermoplastiques.

### [l'art antérieur et le problème technique]

Parmi les caractéristiques du cahier des charges de ces tubes, cinq sont particulièrement difficiles à obtenir conjointement de façon simple :
- tenue aux chocs à froid (-40°C), le tube ne se brise pas,
- tenue aux carburants
- tenue à température élevée (125°C),
- très faible perméabilité à l'essence,
- une bonne stabilité dimensionnelle du tube en utilisation avec de l'essence.
Dans les tubes multicouches de structures diverses, la tenue aux chocs à froid reste imprévisible avant d'avoir réalisé les tests normés de résistance aux chocs à froid.

Par ailleurs, il est déjà connu de la demande de brevet EP 0781799 que dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure à 10⁶ ohms. Il est connu d'abaisser la résistivité superficielle de résines ou matériaux polymériques en leur incorporant des matériaux conducteurs et/ou semiconducteurs tels que le noir de carbone, les fibres en acier, les fibres de carbone, les particules (fibres, plaquettes, sphères) métallisées avec de l'or, de l'argent ou du nickel.

Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charge augmente, la viscosité du mélange polymère / charge augmente. De même, lorsque le taux de charge augmente, le module de flexion du polymère chargé augmente. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsque un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

On connait aussi de la demande de brevet EP 0 731 308 des tubes à base de polyamides et d'EVOH pour le transport d'essence. Ces tubes peuvent avoir une structure à 4 couches comprenant respectivement une couche extérieure de PA 12, une couche de liant qui est une polyoléfine greffée, une couche d'EVOH et une couche intérieure en contact avec l'essence comprenant un mélange de polyamide et de polyoléfine à matrice polyamide.

Le brevet EP 428833 décrit un tube à 3 couches comprenant respectivement une couche extérieure de PA 12, une couche de liant qui est une polyoléfine greffée et une couche intérieure d'EVOH en contact avec l'essence.

Les brevets EP 428834 et EP 477606 décrivent un tube à 5 couches comprenant respectivement une couche extérieure de PA 12, une couche de liant qui est une polyoléfine greffée, une couche de PA 6, une couche d'EVOH et une couche intérieure en PA 6 en contact avec l'essence.

Le brevet US 5038833 décrit un tube à 3 couches comprenant respectivement une couche extérieure de PA 12, une couche d'EVOH et une couche intérieure en PA 12 en contact avec l'essence.

Le brevet EP 1036968 décrit un tube multicouche à base de polyamides, caractérisé par le fait qu'il comporte dans sa direction radiale de l'intérieur vers l'extérieur :
- une première couche formée d'un mélange de polyamide P₁ et de polyoléfine PO₁ à matrice polyamide P₁ ou bien une première couche formée d'un polyamide P₁,
- éventuellement une couche d'EVOH,
- une couche formée d'un copolyamide,
- une couche formée d'un polyamide P₃,
P₁ et P₃ pouvant être identiques ou différents, les couches étant successives et adhérant entre-elles dans leur zone de contact respective.

Dans la description il est écrit que le copolyamide de la couche de copolyamide est avantageusement un coPA 6/12 c'est à dire un copolymère du caprolactame et du lauryllactame, les proportions en poids du caprolactame sur le lauryllactame pouvant varier dans le rapport 20/80 à 80/20. Il est écrit aussi que cette couche de copolyamide peut être encore un sel de l'hexaméthylènediamine avec un acide dicarboxylique ayant de 6 à 12 atomes de carbone. Le terme copolyamide n'est pas correct, néanmoins sont divulgués par exemple le PA 6.6 (hexamethylène adipamide), le PA 6.9, le PA 6.10 et le PA 6.12 (hexamethylène dodecanamide).

Le brevet EP 1162061 décrit un tube multicouche constitué des couches suivantes en allant de l'intérieur vers l'extérieur du tube:
une couche à base de PA 6,
une couche d'EVOH,
une couche constituée soit d'un copolyamide 6/12 ayant de 55 à 80% en poids de caprolactame soit d'un polyamide 6.10 ou 6.12 soit encore d'un mélange de PA 6 et de PA 12,
une couche de PA 12.

Ces deux derniers ont des performances intéressantes. Cependant, on a découvert que, dans ce type de structures, si la couche disposée entre la couche d'EVOH et la couche extérieure est un mélange de copolyamides 6/12, l'un étant majoritaire en 6 et l'autre étant majoritaire en 12, alors on avait d'excellentes performances.

### [Brève description de l'invention]

La présente invention concerne une structure multicouche à base de polyamides comprenant:
- une première couche (1) formée d'un polyamide P₁ ou bien d'un mélange de polyamide P₁ et de polyoléfine PO₁ à matrice polyamide P₁, P₁ étant le PA6
- une couche (2 bis) formée d'EVOH,
- une couche (2) formée d'un mélange de copolyamides 6/12, l'un des copolyamides comprenant en poids plus de 6 que de 12 et l'autre copolyamide comprenant en poids plus de 12 que de 6,
- une couche (3) formée d'un polyamide P₃, P₃ étant choisi parmi les PA11 et les PA12
les couches (1), (2bis), (2) et (3) étant successives et adhérant entre-elles dans leur zone de contact respective.

Selon une variante de la structure de l'invention, la première couche (1) est remplacée par une autre couche (1 bis), cette autre couche (1 bis) étant formée, soit de polyamide P₁ bis, soit d'un mélange de polyamide P₁ bis et de polyoléfine PO₁ bis à matrice polyamide et contenant du noir de carbone électroconducteur produisant une résistivité surfacique inférieure à 10⁶ Ω.

Selon une autre variante, la structure de l'invention comprend une couche supplémentaire (1 bis) disposée du coté de la couche (1), les couches (1) et (1 bis) adhérant entre-elles dans leur zone de contact respective, cette autre couche (1 bis) étant formée, soit de polyamide P₁ bis, soit d'un mélange de polyamide P₁ bis et de polyoléfine PO₁ bis à matrice polyamide et contenant du noir de carbone électroconducteur produisant une résistivité surfacique inférieure à 10⁶ Ω.

Dans les structures ci-dessus, le polyamide P₁ ou P₁ bis est le PA 6.

Avantageusement, dans les structures ci-dessus, la polyoléfine PO₁ ou PO₁ bis est choisie parmi :
- le polyéthylène,
- le polypropylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé.

Dans les structures ci-dessus, le polyamide P₃ est choisi parmi les PA-11 et les PA-12 et de préférence le PA 12.

Les structures de l'invention peuvent se présenter sous forme de tubes dans lesquels la couche (1) ou (1 bis) est à l'intérieur et la couche (3) à l'extérieur. Ils sont utiles comme tubes pour le transport d'essence. Ces tubes peuvent être fabriqués par coextrusion.

### [Description détaillée de l'invention]

En ce qui concerne la matrice polyamide P₁ ou P₁ bis en PA6 de la couche 1 ou 1 bis, on peut utiliser

le produit de condensation de l'acide aminocaproïque ou du caprolactame.

Les diacides carboxyliques peuvent être aliphatiques, cycloaliphatiques ou aromatiques. Les diacides carboxyliques aliphatiques sont des α,ω-diacides carboxyliques possédant au moins 4 atomes de carbone (non compris les atomes de carbone des groupes carboxyliques), de préférence au moins 6, dans la chaîne carbonée linéaire ou ramifiée. Les diacides sont les acides azélaïque, sébacique et 1,12-dodécanoïque. A titre d'illustration de tels PA, on peut mentionner :
le polyhexaméthylènesebacamide (PA-6,10),
le polyhexaméthylènedodécanediamide (PA-6,12),
le poly(undécanoamide) (PA-11),
le poly(laurolactame (2-Azacyclotridécanone) (PA-12),
le polydodécaméthylènedodécanediamide (PA-12,12),
le polycapronamide (PA-6),
le polyhexaméthylèneadipamide (PA-6,6).

Les PA ont une masse moléculaire moyenne en nombre Mn en général supérieure ou égale à 5000. Leur viscosité inhérente (mesurée à 20°C pour un échantillon de 0,5 g dans 100 g de méta-crésol) est en général supérieure à 0,7.

S'agissant des polyoléfines de la couche (1) ou (1bis) on entend par polyoléfines des polymères comprenant des motifs oléfines tels que par exemple des motifs éthylène, propylène, butène-1, et leurs homologues supérieurs.

A titre d'exemple, on peut citer :
- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters (ii) les esters vinyliques d'acides carboxyliques saturés, (iii) les acides dicarboxyliques insaturés, leurs sels, leurs esters, leurs hémiesters, leurs anhydrides (iv) les époxydes insaturés.

Ces copolymères de l'éthylène pouvant être greffés par des anhydrides d'acides dicarboxyliques insaturés ou des époxydes insaturés.
- les copolymères blocs styrène / éthylène-butène / styrène (SEBS) éventuellement maléisés.

On peut utiliser des mélanges de deux ou plusieurs de ces polyoléfines.

On utilise avantageusement :
- le polyéthylène,
- le propylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé.

Il est recommandé pour faciliter la formation de la matrice de polyamide, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :
- le polyéthylène, le polypropylène, les copolymères éthylène propylène, copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé,
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.

La quantité de polyamide formant la matrice dans la couche intérieure peut être comprise entre 50 et 95 parties pour 5 à 50 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères de la couche intérieure par mélange de polyamide, de polyoléfine et éventuellement de compatibilisant selon les techniques usuelles de mélange à l'état fondu (bi vis, Buss, monovis).

Ces mélanges de polyamide et de polyoléfine de la couche 1 ou 1 bis peuvent être plastifiés et éventuellement contenir des charges telles que du noir de carbone qui permet de rendre cette couche antistatique ou électriquement conductrice.

Selon une forme avantageuse de l'invention, la quantité de polyamide de la couche 1 ou 1 bis est comprise entre 50 et 75 parties pour 100 parties du mélange polyamide / polyoléfine.

On décrit maintenant des formes préférées des mélanges de polyamide et de polyoléfine. Ces mélanges peuvent être utilisés dans la couche intérieure éventuellement avec du noir conducteur et/ou être utilisés sans noir conducteur pour améliorer l'adhésion de la couche intérieure contenant du noir conducteur.

Selon une première forme préférée de l'invention la polyoléfine comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

Selon une deuxième forme préférée de l'invention la polyoléfine comprend (i) du polypropylène et (ii) une polyoléfine qui résulte de la réaction d'un polyamide (C4) avec un copolymère (C3) comprenant du propylène et un monomère insaturé X, greffé ou copolymérisé.

Selon une troisième forme préférée de l'invention la polyoléfine comprend (i) un polyéthylène de type LLDPE , VLDPE ou metallocene et (ii) un copolymère éthylène -(meth)acrylate d'alkyle -anhydride maléique.

S'agissant de la première forme les proportions sont avantageusement les suivantes (en poids) :
60 à 70 % de polyamide,
5 à 15 % du mélange de (C1) et (C2) cogreffé
le complément en polyéthylène haute densité .
S'agissant du polyéthylène haute densité sa densité est avantageusement comprise entre 0,940 et 0,965 et le MFI entre 0.1 et 5 g/10 min. ( 190°C 2,16 kg).
Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène /propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthylcyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/10 min. (190°C - 2,16 kg) de préférence 13 à 20.

Avantageusement le mélange de (C1) et (C2) cogreffés, est tel que le rapport MFI₁₀ / MFI₂ est supérieur à 18,5, MFI₁₀ désignant l'indice d'écoulement à 190°C sous une charge de 10 kg et MFI₂ l'indice sous une charge de 2,16 kg. Avantageusement le MFI₂₀ du mélange des polymères (C1) et (C2) cogreffés est inférieur à 24. MFI₂₀ désigne l'indice d'écoulement à 190°C sous une charge de 21,6 kg.

S'agissant de la deuxième forme de l'invention les proportions sont avantageusement les suivantes (en poids) :
60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth)acrylique, l'anhydride maléique et les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, amine ou monoamine. Pour que le polyamide ait une terminaison monoamine il suffit d'utiliser un limiteur de chaîne de formule 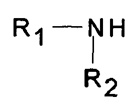 dans laquelle :
R₁ est l'hydrogène ou un groupement alkyle linéaire ou ramifié contenant jusqu'à 20 atomes de carbone,
R₂ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

S'agissant de la troisième forme les proportions sont avantageusement les suivantes (en poids) :
60 à 70 % de polyamide,
5 à 15 % d'un copolymère éthylène -(meth)acrylate d'alkyle -anhydride maléique.
le complément est un polyéthylène de type LLDPE , VLDPE ou metallocene; avantageusement la densité de ce polyethylene est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Le terme "(méth)acrylate d'alkyle" désigne avantageusement les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.
La température de fusion est comprise entre 80 et 120°C. Ces copolymères sont disponibles dans le commerce. Ils sont produits par polymérisation radicalaire à une pression pouvant être comprise entre 200 et 2500 bars.

A titre d'exemple, on peut aussi utiliser les mélanges suivants (en % poids) :
1)
   - 55 à 70 % de PA-6,
   - 5 à 15 % d'un copolymère éthylène propylène majoritaire en polypropylène greffé par de l'anhydride maléique puis condensé ensuite avec des oligomères monoaminés de caprolactame,
   - le complément à 100 % en polypropylène.
2)
   - 55 à 70 % de PA-6,
   - 5 à 15 % d'au moins un copolymère de l'éthylène avec (i) un (méth)acrylate d'alkyle ou un ester vinylique d'acide carboxylique insaturé et (ii) un anhydride d'acide carboxylique insaturé ou un époxyde insaturé greffé ou copolymérisé,
   - le complément en polyéthylène.
3)
   - 55 à 70 % de PA-6.
   - 5 à 15 % de polyéthylène ou copolymères de l'éthylène et d'une alphaoléfine greffé par de l'anhydride maléique ou du méthacrylate de glycidyle.
   - le complément en polyéthylène haute densité.

S'agissant de la couche (2 bis) formée de copolymère EVOH, elle peut être constituée d'EVOH ou de mélange à base d'EVOH. l'EVOH est aussi appelé copolymère éthylène-acétate de vinyle saponifié. Le copolymère éthylène-acétate de vinyle saponifié à employer selon la présente invention est un copolymère ayant une teneur en éthylène de 20 à 70 % en moles, de préférence de 25 à 70 % en moles, le degré de saponification de son composant acétate de vinyle n'étant pas inférieur à 95 % en moles. Avec une teneur en éthylène inférieure à 20 % en moles, les propriétés barrière dans des conditions de forte humidité ne sont pas aussi élevées qu'on le souhaiterait, tandis qu'une teneur en éthylène dépassant 70 % en moles conduit à des baisses des propriétés barrière. Lorsque le degré de saponification ou d'hydrolyse est inférieur à 95 % en moles, les propriétés barrière sont sacrifiées.

On entend par propriétés barrière l'impermeabilité aux gaz, aux liquides et en particulier à l'oxygene, à l'essence pour les automobiles.

Parmi ces copolymères saponifiés, ceux qui ont des indices de fluidité à chaud dans l'intervalle de 0,5 à 100 g/10 minutes sont particulièrement utiles. Avantageusement le MFI est choisi entre 5 et 30 (g / 10min à 230°C sous 2,16 kg), "MFI" abréviation de "Melt Flow Index" désigne l'indice de fluidité à l'état fondu.

Il est entendu que ce copolymère saponifié peut contenir de faibles proportions d'autres ingrédients comonomères, y compris des α-oléfines comme le propylène, l'isobutène, l'α-octène, l'α-dodécène, l'α-octadécène, etc..., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

Quant aux mélanges à base d'EVOH ils sont tels que l'EVOH forme la matrice, c'est à dire qu'il représente au moins 40% en poids du mélange et de préférence au moins 50%. Les autres constituants du mélange sont choisis parmi les polyolefines, les polyamides et éventuellement des polymères fonctionnels.

A titre de premier exemple de ces mélanges à base d'EVOH on peut citer les compositions comprenant (en poids) :
- 55 à 99,5 parties de copolymère EVOH,
- 0,5 à 45 parties de polypropylène et de compatibilisant, leurs proportions étant telles que le rapport de la quantité de polypropylène sur la quantité de compatibilisant est compris entre 1 et 5.

Avantageusement le rapport du MFI de l'EVOH au MFI du polypropylène est plus grand que 5 et de préférence compris entre 5 et 25. Avantageusement le MFI du polypropylène est compris entre 0,5 et 3 (en g/10mm à 230°C sous 2,16 kg) . Selon une forme avantageuse le compatibilisant est un polyéthylène portant des greffons polyamide et il résulte de la réaction (i) d'un copolymère de l'éthylène et d'un monomère insaturé X greffé ou copolymérisé avec (ii) un polyamide. Le copolymère de l'éthylène et d'un monomère insaturé X greffé ou est tel que X est copolymérisé et il peut être choisi parmi les copolymères éthylène-anhydride maléique et les copolymères éthylène - (méth)acrylate d'alkyle - anhydride maléique, ces copolymères comprennant de 0,2 à 10 % en poids d'anhydride maléique et de 0 à 40 % en poids de (méth)acrylate d'alkyle. Selon une autre forme avantageuse le compatibilisant est un polypropylène portant des greffons polyamide qui résulte de la réaction (i) d'un homopolymere ou d'un copolymère du propylène comprenant un monomère insaturé X, greffé ou copolymérisé, avec (ii) un polyamide. Avantageusement X est greffé. Le monomère X est avantageusement un anhydride d'acide carboxylique insaturé tel que par exemple l'anhydride maleique.

A titre de deuxième exemple de ces mélanges à base d'EVOH on peut citer les compositions comprenant :
- 50 à 98 % en poids d'un copolymère EVOH
- 1 à 50 % en poids d'un polyéthylène
- 1 à 15 % en poids d'un compatibilisant constitué d'un mélange d'un polyéthylène LLDPE ou métallocène et d'un polymère choisi parmi les élastomères, les polyéthylènes de très basse densité et les polyéthylènes métallocènes, le mélange étant cogreffé par un acide carboxylique insaturé ou un dérivé fonctionnel de cet acide.

Avantageusement le compatibilisant est tel que le rapport MFI₁₀/MFI₂ est compris entre 5 et 20, où MFI₂ est l'indice d'écoulement en masse fondue à 190°C sous une charge de 2,16 kg, mesuré suivant ASTM D1238, MFI₁₀ est l'indice d'écoulement en masse fondue à 190°C sous une charge de 10 kg suivant ASTM D1238.

A titre de troisième exemple de ces mélanges à base d'EVOH on peut citer les compositions comprenant :
- 50 à 98 % en poids d'un copolymère EVOH
- 1 à 50 % en poids d'un copolymère éthylène - (méth)acrylate d'alkyle,
- 1 à 15 % en poids d'un compatibilisant résultant de la réaction (i) d'un copolymère de l'éthylène et d'un monomère insaturé X greffé ou copolymérisé avec (ii) un copolyamide.
   Avantageusement le copolymère de l'éthylène et d'un monomère insaturé X greffé ou copolymérisé est tel que X est copolymèrisé et c'est un copolymère de l'éthylène et de l'anhydride maléique ou un copolymère de l'éthylène, d'un (méth)acrylate d'alkyle et de l'anhydride maléique. Avantageusement ces copolymères comprennent de 0,2 à 10 % en poids d'anhydride maléique et de 0 à 40 % en poids de (méth)acrylate d'alkyle.

S'agissant de la couche (3) en polyamide P3, on utilise le polyamide 11 ou le polyamide 12. Avantageusement, le polyamide de la couche extérieure est plastifié par des plastifiants usuels tels que le n-butyl benzène sulfonamide (BBSA) et les polymères comprenant des blocs polyamides et des blocs polyéthers. Ces polymères à blocs résultent de la condensation de blocs polyamides à extrémités carboxyliques avec, soit des polyétherdiols, soit des polyétherdiamines, soit un mélange de ces polyéthers. Cette couche extérieure peut contenir aussi des additifs anti-oxydants et des charges usuelles telles que du noir de carbone. D'une manière générale, les plastifiants du type blocs polyamides et blocs polyéthers pouvant être ajoutés dans la couche extérieure sont ceux décrits dans la demande de brevet FR 94 14521.

S'agissant de la couche (2) formée d'un mélange de copolyamides 6/12 l'un comprenant en poids plus de 6 que de 12 et l'autre plus de 12 que de 6, le copolyamide 6/12 résulte de la condensation du caprolactame avec le lauryllactame. Il est clair que "6" désigne les motifs dérivés du caprolactame et "12" désigne les motifs dérivés du lauryllactame. On ne sortirait pas du cadre de l'invention si le caprolactame était remplacé en tout ou partie par l'acide aminocaproïque, de même pour le lauryllactame qui peut être remplacé par l'acide aminododecanoïque.

Avantageusement le copolyamide riche en 6 comprend 52 à 90% en poids de 6 pour respectivement 48 à 10% de 12.

De préférence le copolyamide riche en 6 comprend 55 à 90% en poids de 6 pour respectivement 45 à 10% de 12.

De façon plus préferrée le copolyamide riche en 6 comprend 55 à 70% en poids de 6 pour respectivement 45 à 30% de 12.

Avantageusement le copolyamide riche en 12 comprend 52 à 90% en poids de 12 pour respectivement 48 à 10% de 6.

De préférence le copolyamide riche en 12 comprend 55 à 90% en poids de 12 pour respectivement 45 à 10% de 6.

De façon plus préferrée le copolyamide riche en 12 comprend 55 à 70% en poids de 12 pour respectivement 45 à 30% de 6.

Quant aux proportions du copolyamide riche en 6 et du copolyamide riche en 12 elles peuvent être, en poids, de 40/60 à 60/40 et de préférence 50/50.

Ces mélanges de copolyamides peuvent aussi comprendre jusqu'à 30 parties en poids d'autres (co)polyamides ou de polyoléfines greffées pour 100 parties des copolyamides riches en 6 et riches en 12.

Ces copolyamides ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches adjacentes. Ces produits se fabriquent par les techniques habituelles des polyamides. Des procédés sont décrits dans les brevets US 4424864, US 4483975, US 4774139, US 5459230, US 5489667, US 5750232 et US 5254641.

L'invention concerne aussi des tubes constitués de ces structures, la couche (1) ou (1 bis) est disposée à l'intérieur du tube. Les tubes de l'invention peuvent être produits par coextrusion.

Ces tubes, destinés à amener l'essence du réservoir des automobiles au moteur, ont un diamètre extérieur en général allant de 6 à 12 mm et leur épaisseur varie en général de 0,8 à 2 mm. La couche 1 a une épaisseur en général d'au moins 50 µm et de préférence de 100 à 500 µm.

La couche 1 bis chargée en noir de carbone électroconducteur a une épaisseur en général allant de 25 à 300 µm et de préférence de 50 à 150 µm.

La couche 2 en mélange de copolyamides a une épaisseur en général d'au moins 10 µm et de préférence de 20 à 100 µm.

La couche 2bis d'EVOH a une épaisseur de 10 à 200 µm.

La couche 3 a une épaisseur en général d'au moins 300 µm et de préférence de 400 à 800 µm.

Ces tubes multicouche peuvent être cylindriques de diamètre constant ou annelés.

De manière classique, ces tubes peuvent comporter des gaines de protection notamment en caoutchouc pour les protéger des points chauds du moteur.

## Revendications

1. Structure multicouche à base de polyamides comprenant:
- une première couche (1) formée d'un polyamide P₁ ou bien d'un mélange de polyamide P₁ et de polyoléfine PO₁ à matrice polyamide P₁, le polyamide P₁ étant le PA6,
- une couche (2 bis) formée d'EVOH,
- une couche (2) formée d'un mélange de copolyamides 6/12, l'un des copolyamides comprenant en poids plus de 6 que de 12 et l'autre copolyamide comprenant en poids plus de 12 que de 6,
- une couche (3) formée d'un polyamide P₃, le polyamide P3 étant choisi parmi les PA-11 et les PA-12,
les couches (1), (2 bis), (2) et (3) étant successives et adhérant entre-elles dans leur zone de contact respective.

2. Structure selon la revendication 1 dans laquelle la première couche (1) est remplacée par une autre couche (1 bis), cette autre couche (1 bis) étant formée soit de polyamide P₁ bis soit d'un mélange de polyamide P₁ bis et de polyoléfine PO₁ bis à matrice polyamide et contenant du noir de carbone électroconducteur produisant une résistivité surfacique inférieure à 10⁶Ω, le polyamide P₁ bis étant le PA6.

3. Structure selon la revendication 1 comprenant une couche supplémentaire (1 bis) disposée du coté de la couche (1), les couches (1) et (1 bis) adhérant entre-elles dans leur zone de contact respective, cette autre couche (1 bis) étant formée soit de polyamide P₁ bis soit d'un mélange de polyamide P₁ bis et de polyoléfine PO₁ bis à matrice polyamide et contenant du noir de carbone électroconducteur produisant une résistivité surfacique inférieure à 10⁶ Ω, le polyamide P₁ bis étant le PA6.

4. Structure selon l'une des revendications 1 à 3, dans laquelle la polyoléfine PO₁ ou PO₁ bis est choisie parmi :
- le polyéthylène,
- le polypropylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé.

5. Structure selon l'une quelconque des revendications précédentes dans laquelle dans la couche (2) le copolyamide riche en 6 comprend 52 à 90% en poids de 6 pour respectivement 48 à 10% de 12.

6. Structure selon l'une quelconque des revendications précédentes dans laquelle dans la couche (2) le copolyamide riche en 12 comprend 52 à 90% en poids de 12 pour respectivement 48 à 10% de 6.

7. Structure selon l'une quelconque des revendications précédentes dans laquelle dans la couche (2) les proportions du copolyamide riche en 6 et du copolyamide riche en 12 sont, en poids, de 40/60 à 60/40.

8. Structure selon l'une quelconques des revendications 1 à 7, **caractérisée en ce que**, dans la couche (2), le mélange de copolyamides 6/12 comprend en outre jusqu'à 30 parties en poids d'autres (co)polyamides ou de polyoléfines greffées pour 100 parties des copolyamides riches en 6 et riches en 12.

9. Tubes constitués des structures selon l'une quelconque des revendications précédentes dans lesquels la couche (1) ou (1 bis) est à l'intérieur et la couche (3) à l'extérieur.

## Claims

1. Polyamide-based multilayer structure based on polyamides, comprising:
- a first layer (1) formed from a polyamide P₁ or else from a blend of a polyamide P₁ and a polyolefin PO₁ having a P₁ polyamide matrix, the polyamide P₁ being PA6,
- a layer (2a) formed from EVOH,
- a layer (2) formed from a blend of PA-6/12 copolyamides, one of the copolyamides comprising by weight more 6 than 12 and the other copolyamide comprising by weight more 12 than 6;
- a layer (3) formed from a polyamide P₃, the polyamide P₃ being chosen from PA-11 and PA-12 polyamides,
the layers (1), (2a), (2) and (3) being successive and adhering to one another in their respective contact regions.

2. Structure according to Claim 1, in which the first layer (1) is replaced with another layer (1 a), this other layer (1 a) being formed either from a polyamide P₁a or a blend of a polyamide P₁a and a polyolefin PO₁ a having a polyamide matrix and containing electrically conducting carbon black producing a surface resistivity of less than 10⁶ Ω, the polyamide P₁a being PA6.

3. Structure according to Claim 1, comprising an additional layer (1 a) placed on the layer (1) side, the layers (1) and (1 a) adhering to each other in their respective contact region, this other layer (1 a) being formed either from a polyamide P₁a or a blend of a polyamide P₁a and a polyolefin PO₁ a having a polyamide matrix and containing electrically conducting carbon black producing a surface resistivity of less than 10⁶ Ω, the polyamide P₁a being PA6.

4. Structure according to one of Claims 1 to 3, in which the polyolefin PO₁ or PO₁a is chosen from:
- polyethylene;
- polypropylene;
- ethylene/alpha-olefin copolymers;
- ethylene/alkyl (meth)acrylate copolymers;
- ethylene/alkyl (meth)acrylate/maleic anhydride copolymers, the maleic anhydride being grafted or copolymerized;
- ethylene/alkyl (meth)acrylate/glycidyl methacrylate copolymers, the glycidyl methacrylate being grafted or copolymerized.

5. Structure according to any one of the preceding claims, in which the copolyamide rich in 6 in the layer (2) comprises 52 to 90% by weight of 6 for 48 to 10% of 12 respectively.

6. Structure according to any one of the preceding claims, in which the copolyamide rich in 12 in the layer (2) comprises 52 to 90% by weight of 12 for 48 to 10% of 6 respectively.

7. Structure according to any one of the preceding claims, in which the proportions of the copolyamide rich in 6 and of the copolyamide rich in 12 in the layer (2) are from 40/60 to 60/40 by weight.

8. Structure according to any one of the claims 1 to 7, in which the blend of PA-6/12 copolyamides in the layer (2) also includes up to 30 parts by weight of other grafted polyolefins or (co)polyamides per 100 parts of copolyamides rich in 6 and rich in 12.

9. Tubes consisting of the structures according to any one of the preceding claims, in which the layer (1) or (1 a) is on the inside and the layer (3) on the outside.

## Patentansprüche

1. Mehrschichtstruktur auf Basis von Polyamiden, umfassend:
- eine erste Schicht (1) aus einem Polyamid P₁ oder einer Mischung von Polyamid P₁ und Polyolefin PO₁ mit Polyamid-P₁-Matrix, wobei es sich bei dem Polyamid P₁ um PA-6 handelt,
- eine Schicht (2a) aus EVOH,
- eine Schicht (2) aus einer Mischung von 6/12-Copolyamiden, wobei eines der Copolyamide mehr 6 als 12 umfaßt und das andere der Copolyamide mehr 12 als 6 umfaßt,
- eine Schicht (3) aus einem Polyamid P₃, wobei das Polyamid P₃ unter PA-11 und PA-12 ausgewählt ist, wobei die Schichten (1), (2a), (2) und (3) aufeinanderfolgen und in ihrer jeweiligen Kontaktzone aneinander haften.

2. Struktur nach Anspruch 1, worin die erste Schicht (1) durch eine andere Schicht (1a) ersetzt ist, wobei diese andere Schicht (1a) entweder aus Polyamid P₁a oder einer Mischung von Polyamid P₁a und Polyolefin PO₁ mit Polyamidmatrix gebildet ist und elektrisch leitfähigen Ruß, der einen spezifischen Oberflächenwiderstand von weniger als 10⁶ Ω ergibt, enthält, wobei es sich bei dem Polyamid P₁ um PA-6 handelt.

3. Struktur nach Anspruch 1 mit einer zusätzlichen Schicht (1a), die neben der Schicht (1) angeordnet ist, wobei die Schichten (1) und (1a) in ihrer jeweiligen Kontaktzone aneinander haften, wobei diese andere Schicht (1a) entweder aus Polyamid P₁a oder einer Mischung von Polyamid P₁a und Polyolefin PO₁ mit Polyamidmatrix gebildet ist und elektrisch leitfähigen Ruß, der einen spezifischen Oberflächenwiderstand von weniger als 10⁶ Ω ergibt, enthält, wobei es sich bei dem Polyamid P₁ um PA-6 handelt.

4. Struktur nach einem der Ansprüche 1 bis 3, worin das Polyolefin PO₁ oder PO₁ unter:
- Polyethylen,
- Polypropylen,
- Copolymeren von Ethylen und einem alpha-Olefin,
- Ethylen/Alkyl(meth)acrylat-Copolymeren,
- Ethylen/Alkyl(meth)acrylat/Maleinsäureanhydrid-Copolymeren, wobei das Maleinsäureanhydrid aufgepfropft oder copolymerisiert ist,
- Ethylen/Alkyl(meth)acrylat/Glycidylmethacrylat-Copolymeren, wobei das Glycidylmethacrylat aufgepfropft oder copolymerisiert ist,
ausgewählt ist.

5. Struktur nach einem der vorhergehenden Ansprüche, worin in Schicht (2) das an 6 reiche Copolyamid 52 bis 90 Gew.-% 6 auf respektive 48 bis 10% 12 umfaßt.

6. Struktur nach einem der vorhergehenden Ansprüche, worin in Schicht (2) das an 12 reiche Copolyamid 52 bis 90 Gew.-% 12 auf respektive 48 bis 10% 6 umfaßt.

7. Struktur nach einem der vorhergehenden Ansprüche, worin in Schicht (2) die Gewichtsanteile des an 6 reichen Copolyamids und des an 12 reichen Copolyamids 40/60 bis 60/40 betragen.

8. Struktur nach einem der Ansprüche 1 bis 7, **dadurch gekennzeichnet, daß** in Schicht (2) die Mischung von 6/12-Copolyamiden außerdem bis zu 30 Gewichtsteile anderer (Co)polyamide oder gepfropfte Polyolefine auf 100 Gewichtsteile der an 6 und an 12 reichen Copolyamide umfaßt.

9. Rohre aus den Strukturen nach einem der vorhergehenden Ansprüche, in denen sich die Schicht (1) oder (1a) innen und die Schicht (3) außen befindet.
